**Europäisches Patentamt**

**European Patent Office**

**Office européen des brevets**

(19)

(11) Numéro de publication: **0 073 159**
**B1**

(12) # FASCICULE DE BREVET EUROPEEN

(45) Date de publication du fascicule du brevet:
20.03.85

(51) Int. Cl.⁴: **B 65 D 51/00**

(21) Numéro de dépôt: **82401279.3**

(22) Date de dépôt: **07.07.82**

(54) **Bouchon d'étanchéité, notamment pour réservoirs de carburant.**

(30) Priorité: **13.08.81 FR 8115667**

(43) Date de publication de la demande:
**02.03.83 Bulletin 83/9**

(45) Mention de la délivrance du brevet:
**20.03.85 Bulletin 85/12**

(84) Etats contractants désignés:
**BE CH DE GB IT LI NL SE**

(56) Documents cités:
**DE - A - 2 630 972**
**FR - A - 2 185 238**
**FR - A - 2 274 850**

(73) Titulaire: **COMPAGNIE DES PRODUITS INDUSTRIELS DE L'OUEST (C.P.I.O.), Boîte Postale 1226 Zone Industrielle de Nantes Carquefou, F-44023 Nantes Cedex (FR)**

(72) Inventeur: **Sarrazin, Jean-Michel, Les Hauts-Vallons, F-44850 Le Cellier (FR)**

(74) Mandataire: **Réal, Jacques et al, Régie Nationale des Usines Renault 8-10, avenue Emile Zola, F-92109 Boulogne-Billancourt (FR)**

ACTORUM AG

## Description

La présente invention se rapporte à la réalisation de bouchons d'étanchéité, à couple constant et à joint plat, destinés en particulier à des réservoirs de carburant pour véhicules automobiles, ou à des carters d'huile.

Les fonctions d'étanchéité et de facilité de mise en place de tels bouchons ne sont actuellement pas assurées de manière satisfaisante à l'aide de joints plats en caoutchouc.

En effet, on se heurte à des impératifs contraires pour lesquels les compromis auxquels on fait appel ne sont pas très heureux.

L'étanchéité parfaite implique un couple de serrage élevé pour le vissage du bouchon. Dans le cas contraire, un montage facile se traduit par des fuites de carburant dans certaines situations.

On connaît déjà un type de bouchon tel que décrit dans le brevet français No 2274850 (WASO), qui est constitué d'un corps comportant un prolongement cylindrique dirigé vers la goulotte et un élément assujetti audit prolongement cylindrique, cet élément supportant des oreilles qui parcourent une rampe hélicoïdale située à l'intérieur de la goulotte, un joint d'étanchéité et au moins un ressort prenant appui sur la face interne du corps du bouchon et agissant sur le joint d'étanchéité plat précité. On remarquera toutefois que le joint n'est pas solidement maintenu à sa périphérie interne et que seule la pression du ressort assure son plaquage sur la goulotte, aucun dispositif n'étant prévu pour assurer un calage rigide, en butée, entre le joint et la partie inférieure du bouchon.

De cela résulte une incertitude quant au maintien de l'étanchéité du réservoir dans toutes les situations, même les plus critiques.

La présente invention a pour objet un bouchon d'étanchéité conforme au préambule de la revendication 1 (du type énoncé dans le document FR.A No 2274850) permettant de pallier les difficultés ci-dessus et de maintenir un effort constant d'écrasement du joint du bouchon sur la goulotte de remplissage de carburant, cela assurant une excellente étanchéité, sans pour autant modifier le couple à exercer sur le bouchon au cours de son serrage. Ce problème est résolu par les caractéristiques énoncées dans la partie caractérisante de la revendication 1.

L'invention sera décrite au regard des fig. 1 à 5 ci-jointes, données à titre d'exemple non limitatif, et qui décrivent respectivement:

— la fig. 1, une coupe du bouchon de l'invention selon un plan passant par son axe longitudinal, montrant sa structure en position de montage sur la goulotte;

— la fig. 2 est une vue analogue du bouchon démonté;

— la fig. 3 est une perspective vue de dessous du bouchon;

— la fig. 4 est une coupe analogue à celle des fig. 1 et 2 d'une variante du bouchon;

— la fig. 5 est un détail grossi de la fig. 4, montrant la fixation du joint.

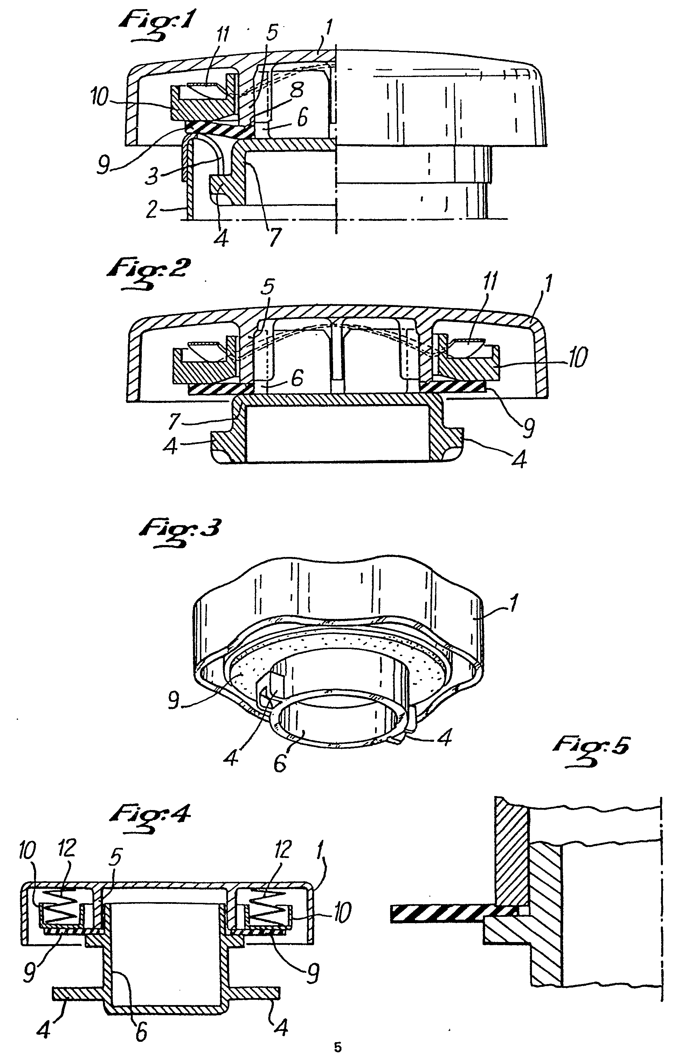

Sur la fig. 1, on voit le corps du bouchon 1, de préférence réalisé en matière synthétique, la goulotte de remplissage du réservoir de carburant sur laquelle il s'applique et la rampe 3 hélicoïdale de la goulotte 2, parcourue par la partie supérieure des deux oreilles 4 du bouchon.

Le corps du bouchon 1 comporte un prolongement cylindrique 5 interne et dirigé vers la goulotte, dans lequel s'adapte un élément 6 supportant des oreilles 4, celui-ci est pourvu d'un épaulement 7 faisant face au rebord inférieur 8 du prolongement cylindrique 5, un joint plat 9 en caoutchouc naturel ou synthétique étant coincé de façon étanche entre ces deux moyens de serrage.

Supportée par le joint 9 et concentrique au prolongement 5 est disposée une bague 10 profilée en U, à l'intérieur de laquelle se trouve un ressort 11 à lame ondulée ou bien, selon la variante de la fig. 4, plusieurs ressorts 12 hélicoïdaux.

L'étanchéité de la goulotte 2 est assurée par le joint 9, dont le rebord interne est écrasé entre l'épaulement 7 de l'élément 6 et le rebord 8 du prolongement 5. Ces deux pièces sont solidarisées en position convenable par tout moyen adéquat tel que clipsage, par soudure, au moyen d'ultrasons, etc. Le rebord externe du joint 9 est plaqué sur la goulotte 2 sous l'action des ressorts 11-12. Cela est effectué selon un effort constant, via la bague 10. Cette dernière, mobile selon l'axe du bouchon à l'encontre des ressorts 11-12, compense l'enfoncement du bouchon, lorsque les oreilles 4 décrivent la rampe 3 hélicoïdale située à l'intérieur de la goulotte 2. Cette disposition permet donc d'exercer un couple de rotation pratiquement constant sur le bouchon tout au long de l'opération d'obturation de la goulotte.

Lorsque les oreilles 4 de l'élément 6 du bouchon arrivent en butée de fin de course de la rampe 3, la hauteur de la bague 10 et les caractéristiques de la rampe 3 ayant été dimensionnées en conséquence, la bague 10 entre alors en contact avec la face inférieure du bouchon 1, s'opposant ainsi à toute progression complémentaire et donc au franchissement de ladite butée.

On voit bien, de ce qui précède, que le dispositif selon l'invention autorise une fermeture étanche tout en ne nécessitant qu'un couple de serrage limité et constant, ne demandant aucun effort particulier à fournir pour amener le bouchon en butée de fermeture.

De plus, cela est obtenu à l'aide d'un simple joint plat en caoutchouc, pouvant être fabriqué par découpe, et donc relativement bon marché, par rapport aux moyens antérieurs assurant la même fonction.

## Revendications

1. Bouchon d'étanchéité, notamment pour réservoirs de carburant, ledit bouchon étant constitué d'un corps (1) comportant un prolongement cylindrique (5), dirigé vers la goulotte (2) et un élément (6) assujetti au prolongement cylindrique (5) précité, ledit élément supportant des oreilles (4) qui parcourent une rampe hélicoïdale (3) située à l'intérieur de la goulotte (2), un joint d'étanchéité (9) plat et au moins un ressort (11) prenant appui sur la face interne du corps (1) du bouchon et agissant sur le joint d'étanchéité plat (9) précité, caractérisé par le fait que le joint d'étanchéité (9) est coincé entre un épaulement (7) de l'élément (6) et le rebord inférieur (8) du prolongement cylindrique (5), une bague (10) profilée en U étant plaquée sur ledit joint (9) au moyen de ressorts (11, 12) précités qui prennent appui sur la face interne du corps (1) du bouchon.

2. Bouchon d'étanchéité selon la revendication 1, caractérisé en ce que le joint (9) est un joint en caoutchouc naturel ou synthétique, de préférence obtenu par découpe.

3. Bouchon d'étanchéité selon la revendication 1, caractérisé en ce que le ressort (11) est un ressort à lame ondulée.

4. Bouchon d'étanchéité selon la revendication 1, caractérisé en ce que le ressort (12) est un ressort hélicoïdal disposé en plusieurs points de la bague (10).

5. Bouchon d'étanchéité selon la revendication 1, caractérisé en ce que les dimensions de la bague (10) et de la rampe (3) sont déterminées de façon à amener la bague (10) en contact avec la face inférieure du bouchon (1), lorsque les oreilles (4) de l'élément (6) arrivent en butée de fin de course de la rampe (3).

## Claims

1. A sealing cap, in particular for fuel tanks, said cap comprising a body (1) having a cylindrical extension portion (5) which is directed towards the spout (2) and an element (6) which is attached to said cylindrical extension portion (5), said element carrying lugs (4) which pass along a helical ramp means (3) disposed within the spout (2), a flat sealing member (9) and at least one spring (11) which bears against the inside face of the body (1) of the cap and which acts on said flat sealing member (9), characterised in that the sealing member (9) is trapped between a shoulder (7) of the element (6) and the lower edge (8) of the cylindrical extension portion (5), a ring (10) of U-shaped configuration being urged against said sealing member (9) by means of said springs (11, 12) which bear against the inside face of the body (1) of the cap.

2. A sealing cap according to Claim 1, characterised in that the sealing member (9) is a sealing member of natural or synthetic rubber, preferably produced by being cut out.

3. A sealing cap according to Claim 1, characterised in that the spring (11) is a corrugated blade spring.

4. A sealing cap according to Claim 1, characterised in that the spring (12) is a helical spring disposed at a plurality of points of the ring (10).

5. A sealing cap according to Claim 1, characterised in that the dimensions of the ring (10) and the ramp means (3) are such as to bring the ring (10) into contact with the lower face of the cap (1) when the lugs (4) of the element (6) reach a position of abutment at the end of their travel on the ramp means (3).

## Patentansprüche

1. Abdichtungskappe, insbesondere für Brennstofftanks, wobei die Kappe aus einem Körper (1) besteht, der eine zylindrische Verlängerung (5) aufweist, die zum Einfüllstutzen (2) hin gerichtet ist, sowie ein an der genannten zylindrischen Verlängerung (5) befestigtes Element (6) aufweist, welches mit Laschen (4) versehen ist, die entlang eines schraubenförmigen Gewindegangs (3) innerhalb des Einlaufstutzens (2) laufen, eine flache Dichtung (9) aufweist und wenigstens eine sich auf der Innenfläche des Körpers (1) der Kappe abstützende Feder (11) aufweist, die auf die genannte flache Dichtung (9) wirkt, dadurch gekennzeichnet, dass die Dichtung (9) zwischen einer Schulter (7) des Elements (6) und dem unteren Rand (8) der zylindrischen Verlängerung (5) eingeklemmt ist, und dass ein U-förmig ausgestalteter Ring (10) auf die Dichtung (9) gedrückt wird unter der Wirkung der genannten Federn (11, 12), die sich auf der Innenfläche des Körpers (1) der Kappe abstützen.

2. Abdichtungskappe nach Anspruch 1, dadurch gekennzeichnet, dass die Dichtung (9) eine Dichtung aus natürlichem oder synthetischem Kautschuk ist, die vorzugsweise als Schnitteil erhalten ist.

3. Abdichtungskappe nach Anspruch 1, dadurch gekennzeichnet, dass die Feder (11) eine gewellte Blattfeder ist.

4. Abdichtungskappe nach Anspruch 1, dadurch gekennzeichnet, dass die Feder (12) eine Spiralfeder ist, die an mehreren Stellen des Rings (10) angeordnet ist.

5. Abdichtungskappe nach Anspruch 1, dadurch gekennzeichnet, dass die Dimensionen des Rings (10) und des Gewindes (3) derart festgelegt sind, dass der Ring (10) in Berührung mit der Innenfläche der Kappe (1) gelangt, wenn die Laschen (4) des Elementes (6) am Ende des Gewindegangs (3) anschlagen.

**Fig.1**

**Fig.2**

**Fig.3**

**Fig.5**

**Fig.4**